# EUROPEAN PATENT APPLICATION

(11) **EP 1 222 990 A1**
(43) Date of publication of application: **17.07.2002**
(21) Application number: 00830840.5
(22) Date of filing: 22.12.2000
(51) Int. Cl.: B23K 20/12, B65H 75/50, B65H 75/14

(54) **Method and machine for manufacturing metallic spools by means of friction welding**

(71) Applicant: SCAGLIA S.p.A., I-24012 Brembilla (Bergamo) (IT)
(72) Inventor: Scaglia, Enzo, 20149 Milano (IT)
(74) Representative: Petraz, Gilberto

(57) **Abstract**

Method and machine for manufacturing, by means of friction welding, metallic spools (11), or reels, in particular of the type employed for winding thread-like elements, such as yarns of natural or artificial fibres, also elastic and very thin. Each spool (11) comprises a cylindrical tubular element (20) made of steel and two containing flanges (21, 22), made of aluminium, friction welded to the ends of the cylindrical tubular element (20).

## Description

The invention refers to a method and a machine for manufacturing, by means of friction welding, metallic spools or reels, particularly of the type employed for winding thread-like elements, such as yarns of natural or artificial fibres, also elastic and very thin. Each spool comprises a cylindrical tubular element and two containing flanges friction welded to the ends of the cylindrical tubular element.

### BACKGROUND OF THE INVENTION

The state of the art includes the manufacturing of spools for winding thread-like elements, such as very thin synthetic yarns, by friction welding a central cylindrical tube and two lateral flanges, wherein both the tube and the flanges are made of light alloy or aluminium.

The central tube and each of the flanges are welded together by the heat developed due to friction caused by the reciprocal high-speed rotation of the flange with respect to the tube, while they are pressed against each other, so that the zones affected by the friction are heated to a temperature of around 660°C, at which temperature the aluminium melts.

After the welding step proper, the spools are machined using machine tools to remove material, both to eliminate the welding bead and to perform surface finishing, which is indispensable to prevent the thread-like element to be wound from being damaged, and also to shape the central tube according to the rotation member to which the spool has to be associated during use.

However, spools made entirely of aluminium or light alloy have the disadvantage that they are particularly expensive, both because of the high cost of the raw material, and also because of the subsequent processing to be done.

The present Applicant has devised and embodied this invention to overcome this shortcoming and hence reduce the costs of producing the spools, especially those intended for the textile field.

### SUMMARY OF THE INVENTION

The method and machine for manufacturing metallic spools by means of friction welding, and also the metallic spools themselves, are set forth and characterized in the main claims, while the dependent claims describe other innovative characteristics of the invention.

One purpose of the invention is to achieve a machine and perfect a manufacturing method which will allow to make metallic spools by means of friction welding wherein at least the cylindrical tubular element is made of very resistant material, easy to work and inexpensive. This in order to reduce the general costs of production, yet at the same time obtain spools which have optimum characteristics of both resistance and surface finishing, at least equal to those of spools at present on the market and made completely of aluminium or light alloy.

In accordance with this purpose, the method according to the invention provides that the cylindrical tubular element is made of steel, while the flanges are made of aluminium, aluminium alloy or other light alloy.

The manufacturing method according to the invention comprises a first step wherein the cylindrical tubular element and at least one flange are made to rotate one with respect to the other and coaxial, at a speed of above 1,000 rpm; a second pressure step, wherein the cylindrical tubular element and the flange are pressed against each other while they are rotating with respect to each other, for a set time T_{X}, in the range of a few tenths of a second, with a force F₁ such as to produce a very high specific pressure P₁, in the range of at least 100 bar, and a third step of further pressure wherein the cylindrical tubular element and the flange are pressed one against the other, while the rotation of one with respect to the other is slowing down, with a force F₂ such as to produce a specific pressure P₂ greater than at least double the value of the specific pressure P₁. Advantageously the specific pressure P₂ is maintained for a time T_{Y}, also in the range of a few tenths of a second.

For a standard spool, having a cylindrical tubular element with an outer diameter of about 64 mm and an inner diameter of about 49 mm, with a surface of contact with the flange of about 14 cm², the specific pressure P₁ is advantageously about 120-130 bar, the time Tₓ is about 0.6-0.7 seconds, the specific pressure P₂ is about 260-280 bar and the time T_{Y} is about 0.7-0.8 seconds. In this way, the welding cycle takes place in a few seconds.

### BRIEF DESCRIPTION OF THE DRAWINGS

These and other characteristics of the invention will become clear from the following description of some preferred forms of embodiment given as a non-restrictive example with reference to the attached drawings wherein:
Fig. is a schematic side view of a machine to make metallic spools according to the invention;
Fig. 2 is a cross section of a metallic spool made with the machine shown in Fig. 1;
Fig. 3 is a graph illustrating the development of the angular velocity V of the cylindrical tubular element of the spool with respect to time t, during the friction welding step;
Fig. 4 is a graph illustrating the development of the specific pressure between the cylindrical tubular element and the flange being welded, with respect to time t, during the friction welding step;
Fig. 5 is a graph illustrating the axial displacements of the flange being welded, with respect to time t, during the friction welding step.

### DETAILED DESCRIPTION OF A PREFERENTIAL EMBODIMENT

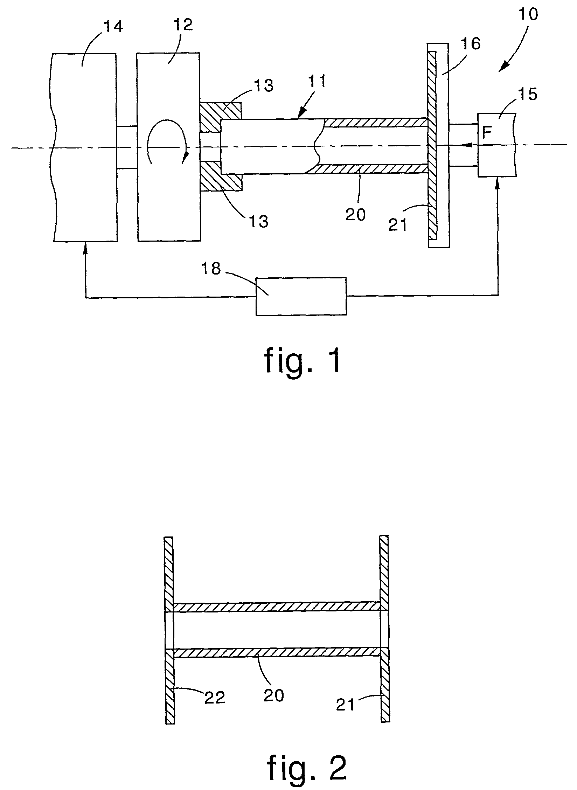

With reference to Fig. 1, a machine 10 according to the invention to make spools 11 onto which thread-like elements are able to be wound, comprises a mandrel 12 provided with gripping jaws 13 and able to be made to rotate selectively by a motor 14 connected thereto.

The machine 10 also comprises a thrust mechanism 15, for example with a hydraulic piston, which is able to impart a force F to a movable plate 16 in an axial direction towards the mandrel 12.

A control unit 18, for example a microprocessor, is able to control both the motor 14, to regulate the angular velocity V of the mandrel 12, and also the axial force F imparted by the thrust mechanism 15.

In accordance with one characteristic of the invention, each spool 11 (Fig. 2) comprises a cylindrical tubular element 20 made of steel, and two lateral flanges 21 and 22 made of aluminium alloy.

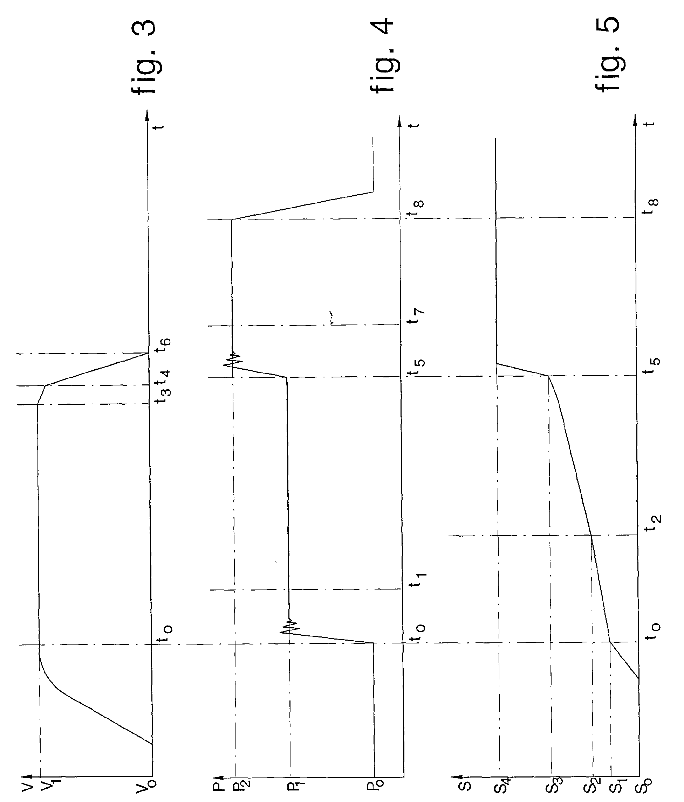

The manufacturing method according to the invention to make spools 11 comprises the following steps, shown with reference to the graphs in Figs. 3, 4 and 5. The values relate to the construction of a standard spool 11, wherein the cylindrical tubular element 20 is about 260 mm long, has an outer diameter of about 64 mm and an inner diameter of about 49 mm.

First of all, one of the flanges, for example the flange 21, is temporarily attached, in any conventional manner, to the movable plate 16, so that they do not rotate with respect to each other.

Then, a tubular element 20 is assembled on the mandrel 12 and is temporarily clamped thereto, by means of the jaws 13, so that it rotates therewith without slipping, either axially or angularly.

Then the motor 14 is commanded so that the mandrel 12 and the tubular element 20 rotate at an angular velocity V₁ of around 1,100-1,200 rpm. T₀ is defined as the initial moment at which the tubular element 20 has reached the angular velocity V₁.

At time t₀ the control unit 18 commands the thrust mechanism 15 to be energized so that a force F₁ is applied on the plate 16, such as to produce a specific pressure P₁ between the tubular element 20 and the flange 21, advantageously between 120 and 130 bar, for example 128 bar.

At time t₁ (Fig. 4), after about 0.10 seconds from time t₀, the thrust mechanism 15 is at normal working conditions.

Due to the effect of the axial force F₁ imparted thereto by the thrust mechanism 15, the plate 16 (Fig. 1) moves towards the mandrel 12 and axially displaces the flange 21 with respect to the tubular element 20. The graph in Fig. 5 illustrates the displacements S of the flange 21.

To be more exact, with respect to the initial position S₀, at time t₂, after about 0.10 seconds from time t₁, the flange 21 is in perfect contact with the head of the tubular element 20 (position S₁). The period of time between time t₂ and time t₀ is defined as "contact time".

The tubular element 20 is made to rotate at a constant angular speed V₁ until time t₃, that is to say, for about 0.5 seconds from time t₀.

Between time t₂ and time t₃ (friction time) the heat produced by the friction between the tubular element 20, rotating at high speed, and the flange 21 which does not rotate, causes said elements to heat up until they reach a temperature of about 660°C, with a consequent local melting of the aluminium alloy flange 21.

At time t₃, the control unit 18 interrupts feed to the motor 14 which, after a braking command, decelerates in linear fashion at time t₄ (Fig. 3) to stop completely at time t₆, together with the tubular element 20.

The specific pressure P₁ on the flange 21 is kept constant until time t₅, immediately after time t₄, that is to say, for a total of about 0.5 seconds from time t₀, causing the flange 21 to make an axial displacement to point S₂, about 4 mm from position S₁.

At time t₅ the control unit 18 sends to the thrust mechanism 15 a command to drastically increase the force F applied on the movable plate 16 and cause the specific pressure between the flange 21 and the tubular element 20 to reach the value P₂, advantageously between 250 and 300 bar, for example 270 bar. This happens while the motor 14 and the tubular element 20 are stopping.

Due to the effect of the increase in the specific pressure P, the displacement of the flange 21 quickly passes to value S₃, equal to about 6 mm from position S₂.

Once it has settled at time t₇, after about 0.1 seconds from time t₅, the specific pressure P2 on the flange 21 is kept constant until time t₈, that is, for a total of about 0.3 seconds from time t₅, after which the thrust mechanism 15 is de-activated by the control unit 18 and the specific pressure P returns to zero, while the flange 21 remains in position S₃, about 10 mm from position S₁.

It is thus, simply and quickly, that the flange 21 is friction welded to the tubular element 20.

An identical operation of friction welding is then performed to join the second flange 22 to the other end of the tubular element 20.

This second operation is not described here in detail, as it is exactly the same as the one previously described, the only difference being that the flange 21, already welded to the tubular element 20, will be arranged on the jaws 13 of the mandrel 12, while the flange 22 is attached to the movable plate 16.

Once both the flanges 21 and 22 have been welded to the tubular element 20, the spool 11 is subjected to subsequent steps of mechanical tooling, of a conventional type, both to remove the welding beads which have formed in correspondence of the joins between the tubular element 20 and the flanges 21 and 22, and also to grind the surfaces thereof, and to suitably shape the inner parts of the tubular element 20, in order to render it suitable for coupling with the command member, not shown in the drawings, with which it is able to cooperate when in use.

It is obvious that modifications or additions may be made to the method and machine 10 for manufacturing metallic spools 11 as described heretofore, without departing from the spirit and scope of this invention.

It is also obvious that, although the invention has been described with reference to a specific example, a skilled person shall certainly be able to make many other equivalent forms of machine, all of which shall come within the field and scope of this invention.

## Claims

1. Manufacturing method to make metallic spools (11) for winding thread-like elements, such as yarns or similar, each comprising a cylindrical tubular element (20) and at least a flange (21) at one end, the method being **characterized in that** said cylindrical tubular element (20) is made of steel and said at least one flange (21) is made of aluminium, aluminium alloy or other light alloy and is attached head-wise to said cylindrical tubular element (20) by means of friction welding.

2. Manufacturing method as in Claim 1, **characterized in that** it comprises a first step wherein said cylindrical tubular element (20) and said flange (21) are made to rotate with respect to each other and coaxial, at a set angular velocity (V₁); a second pressure step wherein said cylindrical tubular element (20) and said flange (21) are pressed one against the other while they are rotating with respect to each other, for a set first time (T_{X}), with a first force (F₁) such as to produce a very high first specific pressure (P₁), and a third step of further pressure wherein said cylindrical tubular element (20) and said flange (21) are pressed against each other, while the rotation of one with respect to the other is slowing down, with a second force (F₂) such as to produce a second specific pressure (P₂) more than at least double the value of said first specific pressure (P₁).

3. Manufacturing method as in Claim 1, **characterized in that** said angular velocity (V₁) is substantially constant and more than 1,000 rpm, advantageously from 1,100 to 1,200 rpm.

4. Manufacturing method as in Claim 1, **characterized in that** said first specific pressure (P₁) is in the range of at least 100 bar, advantageously between 120 and 130 bar.

5. Manufacturing method as in Claim 1, **characterized in that** said first time (T_{X}) is in the range of a few tenths of a second, advantageously about 0.5 seconds.

6. Manufacturing method as in Claim 1, **characterized in that** said second specific pressure (P₂) is between 250 and 300 bar.

7. Manufacturing method as in Claim 1, **characterized in that** said second specific pressure (P₂) is maintained for a second time (T_{Y}) in the range of a few tenths of a second, advantageously about 0.3 seconds.

8. Machine for manufacturing metallic spools (11) for winding thread-like elements, such as yarns or similar, according to the method described in Claim 1, **characterized in that** it comprises rotation means (12, 14) able to make said cylindrical tubular element (20) selectively rotate at a substantially constant set angular velocity (V₁), a thrust mechanism (15) able to impart to a movable plate (16) an axial force (F) towards said mandrel (12), and a control unit (18) able to control both said rotation means (12, 14), to regulate said angular velocity (V₁), and also said axial force (F) imparted by said thrust mechanism (15).

9. Metallic spool (11) for winding thread-like elements, such a yarns or similar, comprising a cylindrical tubular element (20) and at least a flange (21) attached to one end thereof, **characterized in that** said cylindrical tubular element (20) is made of steel and that said at least one flange (21) is made of aluminium, aluminium alloy or other light alloy and is attached head-wise to said cylindrical tubular element (20) by means of friction welding.

10. Metallic spool as in Claim 9, **characterized in that** it also comprises a second flange (22), also made of aluminium, aluminium alloy or other light alloy and attached head-wise to said cylindrical tubular element (20) by means of friction welding, on the side opposite said first flange (21).
